(19) Europäisches Patentamt
European Patent Office
Office européen des brevets

(11) **EP 3 847 028 B1**

(12) **EUROPÄISCHE PATENTSCHRIFT**

(45) Veröffentlichungstag und Bekanntmachung des Hinweises auf die Patenterteilung:
**10.05.2023 Patentblatt 2023/19**

(21) Anmeldenummer: **19761841.6**

(22) Anmeldetag: **29.08.2019**

(51) Internationale Patentklassifikation (IPC):
**B41J 3/407** *(2006.01)*  **G06K 15/02** *(2006.01)*

(52) Gemeinsame Patentklassifikation (CPC):
**B41J 3/4073; B25J 9/1679; G06K 15/021**

(86) Internationale Anmeldenummer:
**PCT/EP2019/073044**

(87) Internationale Veröffentlichungsnummer:
**WO 2020/048853 (12.03.2020 Gazette 2020/11)**

(54) **VERFAHREN ZUR VERZERRUNGSFREIEN UND HOMOGENEN BESCHICHTUNG VON WERKSTÜCKEN MIT BIDIREKTIONAL GEKRÜMMTEN OBERFLÄCHEN**

METHOD FOR DISTORTION-FREE AND HOMOGENEOUS COATING OF WORKPIECES HAVING BIDIRECTIONALLY CURVED SURFACES

PROCÉDÉ DE REVÊTEMENT SANS DÉFORMATION ET HOMOGÈNE DE PIÈCES OUVRÉES AYANT DES SURFACES BIDIRECTIONNELLEMENT COURBES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.09.2018 DE 102018121557**

(43) Veröffentlichungstag der Anmeldung:
**14.07.2021 Patentblatt 2021/28**

(73) Patentinhaber: **FPT Robotik GmbH & Co. KG 88279 Amtzell (DE)**

(72) Erfinder: **KARLSTEDT, Florian 45359 Essen (DE)**

(74) Vertreter: **Michalski Hüttermann & Partner Patentanwälte mbB Kaistraße 16A 40221 Düsseldorf (DE)**

(56) Entgegenhaltungen:
**EP-A1- 2 287 722      EP-A1- 3 208 746
DE-A1-102014 011 301   DE-A1-102015 202 616**

**Beschreibung**

Die Erfindung betrifft ein Verfahren zum verzerrungsfreien und gleichmäßigem Beschichten von Werkstücken mit bidirektional gekrümmten Oberflächen. Im erfindungsgemäßen Verfahren wird auf Basis bereitgestellter digitaler 2D-Dekordaten und digitaler 3D-Oberflächenprofildaten eines zu beschichtenden Werkstücks die Werkstückoberfläche in Rasterflächen aufgeteilt; die Werkstückoberfläche in eine oder mehrere Verfahrbahnen eines Beschichtungskopfes aufgeteilt; die Rasterflächen entlang des Normalenvektors der Verfahrbahn an die Druckkopf-Verfahrbahn projiziert; die 2D-Dekor-Druckdaten des Dekors für jede Rasterfläche als Funktion der Ergebnisse der Rasterprojektion angepasst und die Werkstückoberfläche auf Basis der angepassten Druckdaten beschichtet. Des Weiteren betrifft die vorliegende Erfindung ein System zur Durchführung des erfindungsgemäßen Verfahrens.

Das Aufbringen ästhetischer Dekore oder funktionaler Beschichtungen auf Oberflächen über Druckverfahren gehört seit langem zum Stand der Technik. So können beispielsweise mittels digitaler Beschichtungsverfahren wie dem Laser- oder Inkjet-Verfahren Oberflächen, beispielsweise Papier, mit individuellen Motiven oder weiteren Funktionen und Eigenschaften versehen werden. Das fundamentale Prinzip ist dabei gleich und beinhaltet eine Relativbewegung zwischen einem Druck-/Beschichtungskopf und der zu beschichteten Oberfläche. Letztere kann dann wahlweise direkt (Inkjet) oder indirekt (Laser), d.h. über einen Umweg über eine Trommel, beschichtet werden. Der Beschichtungsvorgang gestaltet sich in den Fällen als einfach, in welchen bedingt durch eine zweidimensionale Oberflächengeometrie des Produktes ein festes Verhältnis zwischen Druckkopf und Oberfläche eingehalten werden kann.

Im Falle komplexerer Oberflächen, beispielsweise 3-dimensionaler Oberflächen mit Sprüngen in der Oberflächenhöhe und/oder partiell in einer oder zwei Richtungen gekrümmter Oberflächen, ist das Bedrucken oder Beschichten deutlich schwieriger, da den veränderlichen Relationen zwischen Oberfläche und Druckkopf Rechnung getragen werden muss. Werden diese Oberflächen mit den üblichen Standardverfahren beschichtet, so ergeben sich als Funktion der Oberflächenabweichungen Verzerrungen oder Farbunterschiede des aufgebrachten Dekors oder aber Einbußen in der Funktionalität durch ungleichmäßig beschichtete Bereiche.

Eine mögliche Lösung für Massenprodukte mit "konstanter" aber nicht planarer Oberflächengeometrie, wie beispielsweise einfach gekrümmte Kaffeetassen mit konstantem Radius, besteht darin, dass über die Adaption des Druckkopfes an die spezifische Oberflächengeometrie des Produktes relativ einfach ein gleichmäßiger Beschichtungsprozess gewährleistet werden kann. Handelt es sich aber um Oberflächen mit komplexen und über die gesamte zu beschichtende Oberfläche variierenden Abweichungen in der Höhe und/oder der Krümmung, insbesondere bei partiell doppelt gekrümmten Oberflächenbereichen, so kann insbesondere für Kleinserien unter vertretbaren technischem Aufwand über die Adaption der Druckkopfgeometrie keine geeignete Anpassung mehr erreicht werden.

Auch in der Patentliteratur finden sich die unterschiedlichsten Ansätze zur Bedruckung oder Beschichtung von gekrümmten Oberflächen.

So offenbart beispielsweise die US 5,831,641 A ein Verfahren und eine Vorrichtung zum Prägen von Bildern hoher Qualität auf nicht-planare Oberflächen, einschließlich der Oberflächen verschiedener Arten von dreidimensionalen Gegenständen, wie Baseballschlägern, die aus einer Anzahl unterschiedlicher Arten von Materialien gebildet sind. In dem Verfahren werden die nicht-planaren Oberflächen der dreidimensionalen Artikel unter Verwendung einer einzigartig modifizierten Tintenstrahl-Bildübertragungstechnik gedruckt. Die Vorrichtung der Erfindung schließt einen modifizierten Tintenstrahldrucker ein, der mit einer neuartigen Artikelpositionierungsvorrichtung verbunden ist, die automatisch die Oberfläche des zu bedruckenden Artikels in einer im Wesentlichen parallelen und leicht von der Stelle, an der die Tintenstrahldüsen angeordnet ist, beabstandeten Ebene des Tintenstrahldruckers hält.

Die DE 1020 1200 6371 A1 beschreibt ein Beschichtungsverfahren. Das Verfahren beinhaltet das Bereitstellen eines Bildes und das Ausführen eines dreidimensionalen (3D) Messprozesses in einem Bereich. Es werden Raumpunkte entsprechend der Region erzeugt. Ein 3D-Netzwerk wird entsprechend der Region erzeugt. 3D Web-Daten werden erzeugt, um einen Roboter, z. B. einen Schwenkarmroboter, für einen Tintenstrahldruckkopf zu bewegen. Rasterdaten, d.h. 3D oder höherdimensionale Raster-Matrix-Daten werden erzeugt, um den Tintenstrahl-Drucckopf zu steuern. Der Roboter wird unter Verwendung der Webdaten bewegt. Das Bild wird mit dem Tintenstrahldruckkopf unter Verwendung der Rasterdaten gedruckt.

In einem weiteren Patentdokument, der EP 2 213 462 A1, wird eine Vorrichtung zum Aufbringen flüssiger Tropfen auf eine Oberfläche offenbart. Die Vorrichtung weist eine Zuführvorrichtung zum Zuführen eines Gegenstands zu einer Auftragsvorrichtung und eine Steuerung zum Steuern der Zuführvorrichtung, einer Bildspeichervorrichtung und der Anwendungsvorrichtung auf. Die Steuerung weist eine Detektoreinrichtung zum Detektieren eines Teils einer dreidimensionalen Struktur des Objekts auf, wobei die Detektoreinrichtung an der Bildspeichereinrichtung und/oder der Applikationseinrichtung angebracht ist. Die Steuerung steuert das Aufbringen von Fluidtropfen auf das einem Druckmotiv entsprechende Objekt in Abhängigkeit von der erfassten dreidimensionalen Struktur.

Weitere Verfahren zur Korrektur von Druckdaten für 3D-Oberflächen werden beispielsweise in der EP 3 208 746 A1 und der EP 2 287 722 A1 bereitgestellt.

Trotz der schon bekannten Lösungen zum Beschichten 3-dimensionaler Oberflächen besteht weiterhin Bedarf an technischen Lösungen, welche in der Lage sind, unterschiedlichste Oberflächengeometrien, und insbesondere komplexe Oberflächengeometrien mit Krümmungen in mehr als einer Oberflächenrichtung, verzerrungsfrei, flexibel und mit einem deutlichen Zuwachs in der Verarbeitungsgeschwindigkeit zu beschichten.

Es ist die Aufgabe der vorliegenden Erfindung ein Verfahren bereitzustellen, welches ermöglicht, Dekore und Beschichtungen an komplexe 3-dimensionale Oberflächen zu adaptieren und diese verzerrungsfrei auf die Oberflächen aufzubringen. Es ist weiterhin die Aufgabe der vorliegenden Erfindung ein System für das erfindungsgemäße Verfahren bereitzustellen.

Gelöst wird die Aufgabe für das Verfahren durch die Merkmale des Anspruchs 1 und für das System durch die Merkmale des Anspruchs 14. Bevorzugte Ausführungsformen des Verfahrens und des Systems sind in den Unteransprüchen angegeben.

Erfindungsgemäß ist ein Verfahren zum verzerrungsfreien Beschichten 3-dimensionaler Werkstücke mit partiell bidirektional gekrümmten Oberflächen, wobei das Verfahren mindestens die Schritte umfasst:

a) Bereitstellung digitaler 2D-Daten eines aufzubringenden Dekors und digitaler 3D-Oberflächenprofildaten eines zu beschichtenden Werkstücks;

b) Aufteilen der Werkstückoberfläche in Flächen eines Rasters, wobei die einzelnen Flächen des Rasters aus einem Linienzug äquidistanter Linien mit Abstand $X_0$ parallel zu einer X- und einem weiteren, dazu orthogonalen Linienzug äquidistanter Linien mit Abstand $Y_0$ parallel zur einer Y-Richtung ausgebildet werden;

c) Aufteilen der Werkstückoberfläche in eine oder mehrere Verfahrbahnen eines Beschichtungskopfes, wobei die Verfahrbahnen oberhalb der Werkstückoberfläche verlaufen und die Schnittlinien benachbarter Verfahrbahnen zumindest aneinanderstoßen;

d) Projektion der die Rasterflächen begrenzenden Linienzüge an eine oder mehrere Verfahrbahnen oberhalb der betreffenden Rasterfläche, wobei die Projektion entlang des Normalenvektors der jeweiligen Verfahrbahn erfolgt;

e) Anpassen der 2D-Dekor-Druckdaten für jede Rasterfläche, wobei die Anpassung der Druckdaten der Rasterfläche sowohl eine Funktion der ursprünglich bereitgestellten 2D-Daten des Dekors als auch eine Funktion der Rasterprojektion an die Verfahrbahn ist; und

f) Beschichten der Werkstückoberfläche auf Basis der angepassten Dekor-Druckdaten.

Überraschenderweise hat sich gezeigt, dass man über das erfindungsgemäße Verfahren in der Lage ist, selbst sehr unregelmäßig und stark gekrümmte 3D Oberflächen reproduzierbar, schichtdickenabweichungsfrei und verzerrungsfrei zu beschichten. Neben der oberflächenangepassten Qualität des Beschichtungsergebnisses durch die rasterprojektionsangepasste Beschichtungsdichte ergeben sich zudem deutliche Vorteile in den Beschichtungsgeschwindigkeiten, da durch die vorgeschlagene geometrisch bedingte Anpassung deutlich weniger Verfahrbahnen des Druckkopfes pro Oberflächeneinheit eingeplant werden müssen. Es können innerhalb einer Verfahrbahn auch ungünstige Winkelrandbereiche mit erfasst und beschichtet werden. Der effektive Druckbereich einer Verfahrbahn wird also bei gleichbleibender Beschichtungsqualität erhöht, da den Verzerrungen in den Bereichen "ungünstiger" Oberflächengeometrien durch die Anpassung entgegengewirkt wird. In Konsequenz führt dies dazu, dass die effektive Beschichtungsfläche über eine Verfahrbahn gesteigert werden kann, sodass der Beschichtungskopf zur vollständigen Beschichtung der Oberfläche eine geringere Strecke zurücklegen muss. Diese positiven Effekte können die Ökonomie von Beschichtungsprozessen teils bidirektional gekrümmter Oberflächen deutlich steigern.

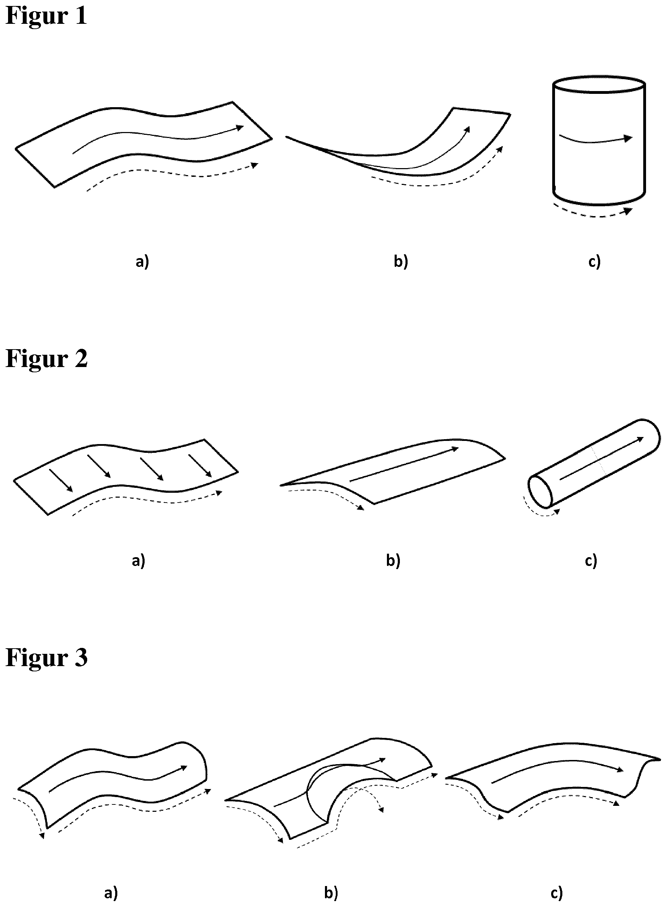

Über das erfindungsgemäße Verfahren wird ein verzerrungsfreies Beschichten ermöglicht. Durch gekrümmte, und insbesondere durch in mehr als eine Richtung gekrümmte, Oberflächen kommt es aufgrund der abweichenden Ausrichtung der jeweiligen Düsen eines Beschichtungskopfes zur darunterliegenden Oberfläche und basierend auf den unterschiedlichen pro Zeiteinheit zurückgelegten Oberflächenabschnitten (siehe Figuren 1-3) zu Fluktuationen in der Beschichtungsdichte. Diese rühren auch daher, dass der Beschichtungskopf sich in aller Regel mit einer konstanten Geschwindigkeit über die Werkstückoberfläche bewegt und eine planare Ausrichtung der Beschichtungsdüsen des Beschichtungskopfes sowie eine 2dimensionale Arbeitsweise aufweist. Als 2dimensionalen Arbeitsweise des Druckkopfes wird dabei verstanden, dass Druckinformationen nur entsprechend der Längen- und Breiteninformationen der Bilddaten verarbeitet werden. Höhenunterschiede bzw. Streckenunterschiede durch abweichende zurückgelegte Z-Werte werden nicht berücksichtigt. Zudem werden die Oberflächendaten dem Druckkopf als 2dimensionale Datensätze bereitgestellt und müssen auf eine 3Dimensionale Oberfläche aufgebracht werden. Eine Verwendung 3dimensionaler Oberflächendaten ist auch bekannt, jedoch aufgrund der 2dimensionalen Arbeitsweise der Druckeinheiten nicht anwendbar. Beide Effekte führen auf planaren Oberflächen zu einer homogenen und bei 3D-bidirektional gekrümmten Oberflächen zu Verzerrungen in der Beschichtungsdichte.

Mittels des erfindungsgemäßen Verfahren können 3-dimensionale Werkstücke beschichtet werden. 3D-Werkstücke sind Werkstücke welche, zumindest abschnittweise, eine nicht planare Oberfläche aufweisen. Die Werkstückoberfläche weist also Höhenunterschiede und Unterschiede in der Steigung der Oberfläche auf. Bedingt durch die Höhenunterschiede und aufgrund der Steigung der Oberfläche ist die Oberfläche des Werkstücks gekrümmt.

Die Werkstücke können partiell bidirektional gekrümmten Oberflächen aufweisen. Eine Oberfläche ist im Sinne der Erfindung bidirektional gekrümmt, wenn ein Teil der Oberfläche eine Krümmung im mathematischen Sinn in zumindest zwei unterschiedliche Richtungen aufweist. Beispiele für solche Oberflächengeometrien sind in den Figuren angegeben.

Im Schritt a) werden digitale 2D-Daten eines aufzubringenden Dekors und digitale 3D-Oberflächenprofildaten eines zu beschichtenden Werkstücks bereitgestellt. Im ersten Schritt werden Daten für die vorliegende Beschichtungssituation bereitgestellt. Die Daten können dabei vor Ort erhoben oder beispielsweise durch eine Datenbank bereitgestellt werden. Die Erhebung der Oberflächenprofildaten kann beispielsweise durch einen Scanvorgang, beispielsweise über ein Laserscannen erfolgen. Die Oberflächenprofildaten enthalten dabei mindestens das Oberflächenprofil des Werkstücks, beispielsweise als XYZ-Matrix, mit X, Y, Z als Ortskoordinaten.

Das Dekor kann beispielsweise ein komplexes Bild, eine geometrische Figur oder eine oder mehrere Linien darstellen. Das Dekor wird dabei auf mindestens einen Teil der Oberfläche des Werkstücks aufgebracht werden. Das Dekor umfasst dabei nicht nur das Bereitstellen optischer Bilddaten. Von dem Begriff Dekor sind auch funktionale Beschichtungen umfasst, welche auf die Werkstückoberfläche aufgebracht werden. Das Dekor umfasst in diesen Fällen dann nicht nur einen Bildeindruck, sondern kann weitere funktionale Eigenschaften, wie beispielsweise Schalter, Leuchtflächen oder haptische Eigenschaften bereitstellen. Die Dekordaten umfassen dabei mindestens sowohl die Positionswie auch die aufzubringende Volumenmenge an den Positionsdaten. Insofern werden unter dem Dekor optische wie auch funktionale Schichtbereiche auf der Werkoberfläche verstanden.

Im Schritt b) wird die Werkstückoberfläche in Flächen eines Rasters aufgeteilt, wobei die einzelnen Flächen des Rasters aus einem Linienzug äquidistanter Linien mit Abstand $X_0$ parallel zu einer X- und einem weiteren, dazu orthogonalen Linienzug äquidistanter Linien mit Abstand $Y_0$ parallel zur einer Y-Richtung ausgebildet werden. Die Werkstückoberfläche wird also in quadratische oder rechteckige Raster aufgeteilt, wobei das Rastermaß für beide Richtungen gleich oder unterschiedlich sein kann. Das Rastermaß, also der Abstand zweier benachbarter Linien desselben Zuges, kann dabei beispielsweise 1 mm bis 10 cm betragen. Das Maß kann dabei als Funktion der auftretenden Oberflächengeometrie des Werkstücks und insgesamt als Funktion dessen räumlicher Abmessungen gewählt werden. Werkstücke mit 3D-Oberflächenabweichungen auf kleinen Längenskalen können bevorzugt ein kleines Rastermaß erfordern. Liegen die 3D-Eigenschaften des Werkstücks auf größeren Längenskalen, so kann eine größere Rasterung angebracht sein. Die Festlegung des XY-Koordinatensystems kann als Funktion der Oberflächensymmetrie des Werkstücks gewählt werden. Ein Linienzug besteht dabei aus mindestens zwei parallel verlaufenden Linien.

Im Schritt c) erfolgt das Aufteilen der Werkstückoberfläche in eine oder mehrere Verfahrbahnen eines Beschichtungskopfes, wobei die Verfahrbahnen oberhalb der Werkstückoberfläche verlaufen und die Schnittlinien benachbarter Verfahrbahnen zumindest aneinanderstoßen. Innerhalb dieses Schrittes wird die gesamte Werkstückoberfläche in Verfahrbahnen eines Beschichtungskopfes aufgeteilt, wobei jedes Oberflächenelement, welches beschichtet werden soll, zumindest einmal überfahren wird. Der Abstand der Verfahrbahn zum Werkstück kann, muss aber nicht, konstant gewählt werden. Abstände zwischen Beschichtungskopf und Werkstückoberfläche zwischen 2,5 mm und 5 cm haben sich als geeignet erwiesen. Die Schnittlinie einer Verfahrbahn ist dabei die Randlinie der Verfahrbahn und kennzeichnet die Außenlinie des maximal beschichtbaren Bereichs des Beschichtungskopfes auf dieser Bahn. Diese Schnittlinien stoßen auf unterschiedlichen Verfahrbahnen aneinander, wenn der Abstand der Schnittlinien zweier benachbarter Verfahrbahnen kleiner oder gleich der Beschichtungsauflösung ist. Es ist aber auch möglich, dass die einzelnen Verfahrbahnen so festgelegt werden, dass diese an den Randbereichen, also an den Schnittlinien, überlappen. Mögliche Überlappungsbereiche benachbarter Verfahrbahnen können beispielsweise 5 - 25% der gesamten Beschichtungskopffläche betragen. Bei einer Überlappung der Verfahrbahn können also bestimmte Oberflächenbereiche von mindestens zwei Verfahrbahnen beschichtet werden.

Im Schritt d) erfolgt die Projektion der die Rasterflächen begrenzenden Linienzüge an eine oder mehrere Verfahrbahnen oberhalb der betreffenden Rasterfläche, wobei die Projektion entlang des Normalenvektors der jeweiligen Verfahrbahn erfolgt. Dieses Raster wird entlang der Normalenvektoren der jeweils über dem Oberflächenabschnitt liegenden einen oder mehreren Verfahrbahnen projiziert. An den Schnittlinien und den Übergangsbereichen der Verfahrbahnen bedeutet dies, dass eine Projektion an ggf. zwei betroffene Verfahrbahnen durchgeführt werden kann, wobei sich die Projektionen der Raster in diesem Bereich aufgrund der unterschiedlichen Ausrichtungswinkel der jeweiligen Verfahrbahnen unterscheiden können. Die Vektorebenen der Verfahrbahnen mit den projizierten Rasterlinien und Schnittlinien werden anschließend in eine 2-dimensionale Form transformiert. Die 2-dimensionalen Verfahrbahnen werden entsprechend ihrer Positionen nebeneinander positioniert, so dass jeweils die Schnittlinien der benachbarten Verfahrbahnen nebeneinanderliegen. Lassen sich aufgrund ungünstiger Winkelbereiche in den Außenbereichen der Verfahrbahn bestimmte Werkstückoberflächenbereiche nicht adäquat innerhalb bestimmter Winkelabweichungen zum Beschichtungskopf beschichten, so kann die Verfahrbahn auf eine Druckbahn reduziert werden. Die Druckbahn weist dieselbe Ausrichtung aber einen kleineren Flächenbereich verglichen zur Verfahrbahn auf, wobei die Düsen an den Rändern der Verfahrbahn dann nicht mehr zur Beschichtung genutzt werden. Anschließend werden die Schnittlinien der jeweils benachbarten Druckbahnen dahingehend bewertet, ob diese zu einander komplementär sind, das heißt sich lückenlos ergänzen. Lassen sich die Schnittlinien benachbarten Druckbahnen durchgängig aneinander anfügen, so ist keine Harmonisierung der Bilddaten der Druckbahnen erforderlich. Diese Druckbahnen können direkt nebeneinander ausgerichtet über den 2-dimensionalen Bilddaten positioniert werden.

Im Schritt e) erfolgt eine Anpassung der 2D-Dekor-Druckdaten für jede Rasterfläche, wobei die Anpassung der Druckdaten der Rasterfläche sowohl eine Funktion der ursprünglich bereitgestellten 2D-Daten des Dekors als auch eine Funktion der Rasterprojektion an die Verfahrbahn ist. Das durch einen jeweiligen Bereich des Druckkopf aufzubringende Volumen ergibt sich also als Funktion aus der jeweiligen Abweichung der Druckkopfausrichtung von der Oberfläche sowie dem vorgesehenen Schichtvolumen innerhalb des jeweiligen Rastersbereiches. Die Anpassung der Daten einer Rasterfläche ist demzufolge einmal davon abhängig, ob das Dekor überhaupt einen Pixel an dieser Oberflächenstelle vorsieht. Falls das Dekor an dieser Stelle eine Beschichtung vorsieht, dann wird die Pixeldichte zudem als Funktion der Oberflächengeometrie an dieser Oberflächenstelle, proportional transformiert über die Projektion an die Verfahrbahn, korrigiert. Bei parallel verlaufenden Flächen, das heißt die Normalenvektoren der Vektorebene der Verfahrbahn und des jeweiligen Schnittpunktes der Oberflächen sind parallel, sind die Abstände der Projektionen der Rasterlinien gleich zu denen der Rasterlinien auf der Oberfläche. Bei nicht parallelen Verläufen ergeben sich abweichende Abstände, wobei die Abstände der projizierten Rasterlinien nur kleiner/gleich den Abständen auf der Oberfläche sein können. Dieser Effekt ergibt sich daraus, dass mit zunehmender Winkelabweichung die auf der Oberfläche zu bedruckende Strecke steigt. Die Winkelabweichung entspricht dabei der durch die Projektion vernachlässigten Höhenveränderung, durch die die Rasterlinien in der 2dimensionalen Projektion bei konstantem Abstand auf der Oberfläche scheinbar näher zusammenrücken. Die Bilddaten werden nun so aufbereitet werden, dass entsprechend der Verringerung des Abstandes der Rasterlinien sowohl in Längs- als auch in Breitenausrichtung die Anzahl der Druckpunkte erhöht wird. Ergebnis dieser Auflösungsanpassung ist, dass zwischen den Rasterlinien auf der Werkstückoberfläche stets dieselbe Zahl an Druckpunkten in Längs- als auch Breitenausrichtung vorhanden ist. Dies kann eine gleichmäßige Beschichtung sicherstellen, welche besonders verzerrungsfreie Bilder und/oder robuste funktionale Bereiche bereitstellt. Die 2D-Dekor-Druckdaten für jede Rasterfläche umfassen dabei mindestens die Anzahl der im Raster aufzubringenden Punkte (Pixel) sowie die Auftragsmenge pro Pixel.

Im letzten Schritt f) wird die Werkstückoberfläche auf Basis der angepassten Dekor-Druckdaten beschichtet. Die Beschichtung erfolgt dabei in der Regel durch das Aufbringen von Flüssigkeiten auf die Werkstückoberfläche. Bei den Flüssigkeiten kann es sich beispielsweise um Farben, Oberflächenversiegelungssubstanzen oder um andere funktionale Verbindungen handeln, welche der Oberfläche ein anderes ästhetisches oder funktionales Erscheinungsbild verleihen. Die Beschichtung kann beispielsweise mittels eines Inkjet-Verfahrens erfolgen. Mittels der Beschichtung lassen sich Funktionsschichten herstellen, wobei Funktionsschichten zumindest partiell zusammenhängende Bereiche sind, welche auf die Werkstückoberfläche aufgebracht oder aufgedruckt werden. Diese zusammenhängenden Bereiche erfüllen dabei weitergehende funktionale Eigenschaften auf der Werkstückoberfläche. Diese funktionalen Eigenschaften können beispielsweise haptischer oder optischer Art sein. Denkbar sind leuchtende Bereiche oder das Aufbringen von Dekoren. Es sind aber auch funktionale Bereiche oder Schichten denkbar, welche festgelegt elektrische Eigenschaften in Form von Schaltern aufweisen. Des Weiteren können funktionale Schichten auch weitere optische Eigenschaften in Form von leuchtenden Bereichen bereitstellen. Zusätzlich können über die funktionalen Bereiche auch weitere haptische Eigenschaften, wie beispielsweise ein tastbares Relief darstellen.

In einer bevorzugten Ausgestaltung des Verfahrens kann das Anpassen der 2D-Dekor-Druckdaten im Verfahrensschritt e) die Pixeldichte der Rasterflächen umfassen. Das Anpassen der Pixeldichte hat sich für das vorliegende Verfahren als besonders geeignet erwiesen, wobei insbesondere in den bidirektional gekrümmten Bereichen die Anzahl an Bildpunkten, d.h. die Pixeldichte, angepasst wird. Dies kann zu besonders verzerrungsfreien Beschichtungen auch auf schwierig zu bedruckenden Geometrien beitragen.

In einer bevorzugten Ausgestaltung des Verfahrens kann das Anpassen der 2D-Dekor-Druckdaten im Verfahrensschritt e) die Auftragsmenge auf die jeweilige Rasterfläche umfassen. Das Anpassen der Volumenmenge pro Rasterfläche hat sich für das vorliegende Verfahren als besonders geeignet erwiesen, wobei insbesondere in den bidirektional gekrümmten Bereichen das Auftragsvolumen der einzelnen Pixel und somit auch das Auftragsvolumen pro Rasterflächen umfassend ein oder mehrere Pixel angepasst wird. Dies kann zu besonders verzerrungsfreien Beschichtungen auch auf schwierig zu bedruckenden Geometrien beitragen.

In einer bevorzugten Ausgestaltung des Verfahrens kann in einem weiteren Schritt der Normalenvektor für jede Rasterfläche aus Schritt b) ermittelt werden. Durch die Rasterlinien wird die Oberfläche in Quadrate oder Rechtecke eingeteilt, wobei ein Oberflächenabschnitt (Raster) durch 4 Rasterlinien begrenzt ist. Bei verzerrten Oberflächenbereichen werden die Quadrate oder Rechtecke aufgrund der Krümmungen in 2 Richtungen selber verzerrt. Bei gleichbleibenden Abständen der Rasterlinien führen unterschiedliche Krümmungen der Teilbereiche zu Krümmungen in den Rasterlinien, woraus die Verzerrung der Flächen resultiert. Für diesen Oberflächenbereich lässt sich ein Normalenvektor festlegen welcher senkrecht auf der durch die Rasterlinien begrenzten Teiloberfläche steht. Ist innerhalb der Rasterfläche die Oberfläche selbst noch gekrümmt, kann der Normalenvektor beispielsweise für die planare Fläche angegeben werden, welche die gekrümmte Oberfläche im Raster schneidet und oberhalb und unterhalb der Schnittlinie zur gekrümmten Werkstückoberfläche im Raster denselben Rauminhalt aufweist.

In einer bevorzugten Ausführungsform des Verfahrens kann die projektionsabhängige Dichteanpassung in Schritt e) entweder als Funktion e1) der Winkelabweichungen $\alpha(x,y)$ des Normalenvektors der Rasterfläche in der X- ($\alpha(x)$) wie auch in der Y-Richtung ($\alpha(y)$) zum Normalenvektor der Verfahrbahn; oder e2) der mittleren Abstände der Rasterlinien in X- ($\Delta X$), in Y-Richtung ($\Delta Y$) oder als Kombination der mittleren Abstände in XY-Richtung ($\Delta XY$) der auf die Verfahrbahn projizierten Rasterlinien erfolgen. Zur Anpassung der Pixeldichte haben sich die Winkelabweichungen zwischen Normalenvektor der betreffenden Rasterfläche und der Verfahrbahn als besonders geeignet erwiesen. Die prinzipiellen Größen und Relationen zwischen den beiden Normalenvektoren sind dabei weiter hinten in den Figuren dargestellt und diskutiert. Diese Parameter, d.h. die Winkel zwischen beiden Vektoren, lassen sich einfach und reproduzierbar bestimmen und Anpassungen über diese Differenzen führen zu "harmonischen" Pixel-Dichteverläufen. Ebenso harmonische Anpassungen können sich über die Berücksichtigung der "Rasterweite" in der X und der Y-Richtung ergeben. Die Differenz dieser Projektion ist ein Maß für die Abweichung der vorliegenden zu einer planaren Oberflächengeometrie. Falls sich für ein Raster, bedingt über die Oberflächeneigenschaften des Werkstücks, verschiedene Rasterabstände ergeben, wird der mittlere Linienabstand zur Korrektur herangezogen.

In einer weiteren Ausgestaltung des Verfahrens kann die Aufteilung der Werkstückoberfläche in mehrere Verfahrbahnen in Schritt c) sequentiell erfolgen, wobei in einem ersten Schritt eine erste Verfahrbahn $D_0$ und in weiteren Schritten die folgenden Verfahrbahnen jeweils benachbart zur vorhergehenden Verfahrbahn festgelegt werden, wobei die weiteren Verfahrbahnen entweder lückenlos an benachbarte Verfahrbahn anschließen oder überlappend zu diesen festgelegt werden. Die Aufteilung der Werkstückoberfläche in Verfahrbahnen kann günstigerweise so erfolgen, dass eine erste Verfahrbahn festgelegt und die weiteren Verfahrbahnen zu beiden Seiten der ersten Verfahrbahn lückenlos an diese anschließen. Es ist aber auch möglich, dass die Verfahrbahnen überlappend ausgerichtet sind, so dass ein und derselbe Werkstückoberflächenbereich von beispielsweise zwei unterschiedlichen Verfahrbahnen aus beschichtet werden kann. Die Festlegung, welche der beiden oder ob sogar beide Verfahrbahnen den überlappenden Bereich beschichten kann als Funktion der vorliegenden Winkelabweichungen oder anhand weiterer Überlegungen getroffen werden. Auf diese Art und Wiese kann die gesamte Werkstückoberfläche angepasst beschichtet werden.

In einem weiteren Aspekt des Verfahrens kann der Schritt c) die Schritte umfassen:

c1) Festlegen eines aktiven Beschichtungsbereichs für jede Verfahrbahn als Funktion der Projektionen der Schnittlinien und der Rasterflächen an die Verfahrbahn;

c2) Auswahl eines aktiven Beschichtungsbereiches einer Verfahrbahn $D_0$; und

c3) Angleichen der aktiven Beschichtungsbereiche der jeweils benachbarten Verfahrbahnen ($D_{-1}$ und $D_{+1}$), wobei die Angleichung derart erfolgt, dass sich aktive Beschichtungsbereiche benachbarter Verfahrbahnen lückenlos ergänzen. Als Funktion der Oberflächengeometrie des Werkstücks hat es sich als günstig erwiesen, dass nicht immer die gesamte mögliche Beschichtungsfläche eines Beschichtungskopfes auf seiner Verfahrbahn genutzt wird. Dies kann in den Fällen ungünstig sein, wenn beispielsweise die Oberfläche des Werkstücks auf der Größenskala der Verfahrbahn sehr inhomogen, d.h. stark gewölbt ist. In diesen Fällen kann es sinnvoll sein, nicht die volle Verfahrbahnbreite als Druckbahn zu nutzen und beispielsweise die Ränder der Verfahrbahn unbeschichtet zu lassen. Die Beschichtung des Oberflächenbereiches kann dann über die benachbarte Verfahrbahn erfolgen, welche eine homogenere zu beschichtende Oberfläche enthalten kann. Durch diese Aufteilung zwischen Verfahrbahn und Druckbahn kann eine homogenere Beschichtung über die Oberfläche erhalten werden.

Innerhalb einer weiteren, bevorzugen Charakteristik des Verfahrens kann in Schritt c1) der aktive Beschichtungsbereich einer Verfahrbahn als Funktion der maximalen Winkelabweichung zwischen Verfahrbahn-Normalenvektor und Normalenvektoren der darunterliegenden Rasterflächen festgelegt werden. Unter bestimmten Oberflächengeometrien kann es vorteilhaft sein, dass die Außenbereiche der Verfahrbahn eine zu hohe Winkelabweichung verglichen mit den anderen Beschichtungsdüsen im "inneren" der Verfahrbahn aufweisen. Um diese Situation abzubilden, kann beispielsweise eine maximale Winkelabweichung zwischen den Normalenvektoren von beispielsweise maximal 25°, bevorzugt maximal 20°, des Weiteren bevorzugt maximal 15° festgelegt werden. Die ausgesparten Bereiche würden dann über eine benachbarte, überlappende Verfahrbahn beschichtet werden. Im erfindungsgemäßen Verfahren kann diese Aufteilung optimiert werden, da durch die Kompensation der Winkelabweichung in den Bilddaten auch Verfahrbahnen gewählt werden können, welche bezüglich der vorliegenden Winkelabweichungen "ungünstiger" sind. Es können also pro Verfahrbahn größere Beschichtungs- oder Druckbereiche gewählt werden, welches zu einer Verringerung der nötigen Anzahl an Verfahrbahnen führt. Diese Einsparung kann zu einem schnelleren und produktiveren Beschichtungsprozess führen.

Innerhalb einer zusätzlichen Ausgestaltung des Verfahrens kann die Ausrichtung der ersten Verfahrbahn $D_0$ im Schritt c) so gewählt werden, dass die resultierende Summe der Winkelabweichungen $\alpha$ in dieser Richtung kleiner ist als die Summe der Winkelabweichungen in einer dazu orthogonalen Richtung. Zur Durchführung eines schnellen und möglichst symmetrischen Beschichtungsprozesses hat es sich als günstig erwiesen, dass die erste Verfahrbahn so festgelegt wird, dass eine möglichst kleine Winkelabweichung über die zu beschichtende Fläche erhalten wird. Dies kann günstigenfalls dazu führen, dass die sich krümmenden Oberflächen auf der verbleibenden Restoberfläche besonders einfach aufgeteilt werden können. Dies kann die Anzahl der nötigen Verfahrbahnen des Beschichtungskopfes verringern und bei gleichbleibender Qualität zu einer Verringerung der Beschichtungszeit beitragen.

Innerhalb eines bevorzugten Aspektes des Verfahrens kann das Aufteilen der Werkstückoberfläche in eine oder mehrere Verfahrbahnen in Schritt c) so erfolgen, dass die Gesamtsumme des Produktes $(X_0 - \Delta X) * (Y_0 - \Delta Y)$ über die einzelnen an die Verfahrbahn projizierten Raster einer jeden Verfahrbahn Null ergibt. Eine Möglichkeit zur effizienten Aufteilung der Werkstückoberfläche in einzelne Verfahrbahnen kann sich dadurch ergeben, dass die Verfahrbahn eine möglichst symmetrische Abweichung sowohl in X- wie auch in Y-Richtung abdeckt. Dazu werden die Differenzen der projizierten Rasterlinienabstände zu den ursprünglichen Rasterabständen betrachtet. Diese Aufteilung kann die Beschichtung eines Oberflächenbereiches mit stark asymmetrischen Oberflächeneigenschaften verhindern und so zu einem besonders gleichmäßigen Beschichtungsergebnis beitragen.

In einer bevorzugten Ausführungsform des Verfahrens kann das Aufteilen der Werkstückoberfläche in eine oder mehrere Verfahrbahnen in Schritt c) so erfolgen, dass die Gesamtsumme des Produktes $\tan(\alpha(x)) * \tan(\alpha(y))$ über die einzelnen Rasterflächen einer Verfahrbahn jeweils Null ergibt. Eine weitere Möglichkeit zum Erhalt eines möglichst gleichmäßigen Beschichtungsergebnisses kann darin liegen, dass die Verfahrbahnen über eine möglichst gleichbleibende Winkelabweichung in X- und in Y-Richtung der Normalenvektoren der Rasterflächen festgelegt werden. Dieses Auswahlkriterium kann die Beschichtung zu starker Abweichungen innerhalb einer Verfahrbahn verhindern und so zu einem qualitativ hochwertigen Beschichtungsergebnis führen.

Innerhalb eines weiteren, bevorzugten Aspektes des Verfahrens kann die projektionsabhängige Anpassung der Pixeldichte einer Rasterfläche in der Variante e1) als Funktion der Winkelabweichungen $(\alpha(x,y))$ zwischen Normalenvektor der Rasterfläche und Normalenvektor der entsprechenden Druckbahn in Schritt f) über mindestens zwei Faktoren F(x,y):

$$F(x) = 1+ \tan(\alpha(x)) \text{ und } F(y) = 1+ \tan(\alpha(y))$$

erfolgen. Es hat sich weiterhin als vorteilhaft erwiesen, die Faktoren zur Anpassung der Pixeldichte bei Winkelabweichungen der Normalenvektoren über oben aufgeführte Faktoren zu erreichen. Diese Faktoren können die Krümmung von Oberflächen kompensieren, so dass auch auf bidirektional gekrümmten Oberflächen ein gleichmäßiges Beschichtungsbild erhalten wird.

Im Rahmen einer weiteren Ausführungsform des Verfahrens kann die projektionsabhängige Anpassung der Pixeldichte einer Rasterfläche in der Variante e2) als Funktion der projizierten mittleren Abstände der Rasterlinien in X-($\Delta X$) und in Y-Richtung ($\Delta Y$) über mindestens zwei Faktoren F(x,y) mit

$$F(x) = 1/(1+(X_0-\Delta X)) \text{ und } F(y) = 1/(1+(Y_0-\Delta Y))$$

erfolgen. Es hat sich weiterhin als vorteilhaft erwiesen, die Faktoren zur Anpassung der Pixeldichte als Funktion der oben aufgeführten Faktoren zu erreichen. Diese Faktoren basieren auf den Abweichungen der Linienabstände in der Rasterprojektion und können die Krümmung von Oberflächen kompensieren, so dass auch auf bidirektional gekrümmten Oberflächen ein gleichmäßiges Beschichtungsbild erhalten wird.

In einer bevorzugten Ausführungsform des Verfahren kann der Abstand der äquidistanten Linien der Linienzüge in X- ($X_0$) und in Y-Richtung ($Y_0$) in Schritt b) größer oder gleich 0,1 mm und kleiner oder gleich 5 mm betragen. Die Wahl der Linienabstände in den unterschiedlichen Richtungen kann als prinzipiell als Funktion der Größe und Oberflächenkrümmung der Werkstückoberfläche erfolgen. In den meisten Fällen hat sich aber oben angegebener Bereich für die Abstände der Rasterlinien als besonders geeignet herausgestellt. Mit diesen Abständen können eine Vielzahl unterschiedlicher Oberflächengeometrien mit einer hinreichenden Anpassung versehen werden, sodass qualitativ bessere Beschichtungen in kürzerer Zeit erhältlich sind. Kleinere Abstände können nachteilig sein, da der Rechenaufwand überproportional steigt, wohingegen größere Abstände zu nur einer "ungenauen" und nicht adäquaten Kompensierung führen können. Bevorzugt können der Abstand der äquidistanten Linien der Linienzüge in X- ($X_0$) und in Y-Richtung ($Y_0$) in Schritt b) größer oder gleich 0,25 mm und kleiner oder gleich 4,5 mm, bevorzugt größer oder gleich 0,3 mm und kleiner oder gleich 4,5 mm betragen.

Weiterhin für das Verfahren bevorzugt kann das Werkstück mittels eines Inkjet-Verfahrens über einen Inkjet-Druckkopf mit einer oder mehreren Düsen bedruckt werden und die Anpassung der Pixeldichte über eine Erhöhung der Anzahl an beschichteten Punkten erfolgen. Das Inkjet-Verfahren hat sich im Rahmen der erfindungsgemäßen Ausgestaltung als besonders geeignet erwiesen, da mittels der hier vorgeschlagenen Anpassung deutliche Zugewinne in der Kompensation von Verzerrungen und in der Geschwindigkeit des Drucks erreicht werden können. Diese Vorteile können insgesamt dazu führen, dass die Bedruckung bidirektional gekrümmter Oberflächen deutlich effizienter und günstiger ausgeführt werden können.

In einer weiteren Ausgestaltung des Verfahrens kann die die Erhöhung der Anzahl an beschichteten Punkten über eine Anpassung der Impulsfrequenz einer oder mehrerer Düsen erfolgen. Die Veränderung der Impulsfrequenz zur Anpassung der Dichte im Rahmen eines Inkjet-Verfahrens hat sich gegenüber einer Änderung der Fahrgeschwindigkeit des Druckkopfes als besonders geeignet erwiesen. Zum einen kann über die gleichbleibende Geschwindigkeit des Beschichtungskopfes auf der Verfahrbahn ein gleichmäßiges Beschichtungsergebnis erhalten werden. Zum anderen kann die angepasste Beschichtung innerhalb der ursprünglichen Beschichtungskopfgeschwindigkeit erfolgen, sodass in der Beschichtung stark gekrümmter Oberflächen nicht unnötig Zeit vergeudet wird. Derart lässt sich die Beschichtung äußerst effizient und günstig durchführen.

Des Weiteren ist es erfindungsgemäß, dass das erfindungsgemäße Verfahren zur Beschichtung von Automobilteilen verwendet wird. Mittels des erfindungsgemäßen Verfahrens können insbesondere Automobil-Interieur sowie auch -Exterieurteile beschichtet werden. Die Abmessungen der zu beschichteten Teile und die Krümmungen die diese Teile aufweisen haben sich für das Verfahren als besonders geeignet erwiesen. Diese Teile können deutlich schneller und verzerrungsfreier beschichtet werden, welches einer deutlich besseren Ästhetik und zu deutlichen Einsparungen an Zeit und Energie beitragen kann.

Weiterhin erfindungsgemäß ist ein System zur Beschichtung 3-dimensionaler bidirektional gekrümmter Oberflächen mindestens aufweisend eine Recheneinheit, eine Aktorik, eine Inkjet-Einheit mit mindestens einem Düsenkopf und eine Steuereinheit, wobei das System dazu eingerichtet ist, dass erfindungsgemäße Verfahren auszuführen. Das System kann dabei eine Recheneinheit aufweisen, welche in der Lage ist die Anpassungen der Pixeldichte und die Festlegung der einzelnen Verfahrbahnen in Echtzeit vorzunehmen. Es ist aber auch möglich, bei feststehenden Oberflächengeometrien und feststehenden Dekoren die Berechnung der Anpassung vor dem eigentlichen Druckvorgang vorzunehmen und den Druckkopf mit den angepassten Dekordaten zu versorgen. Dies kann eine Recheneinheit mit einer höheren Rechenleistung verlangen. Die Aktorik kann ein oder mehrere kombinierte X,Y- oder X,Y,Z-Arme sein welche Linear- und/oder Rotationsbewegungen in X,Y,Z ausführen und den Druck-/Düsenkopf und/oder das Werkstück tragen. Der Düsenkopf kann dabei zweckmäßigerweise eine oder mehrere Düsen tragen. Bevorzugt trägt der Druckkopf mehrere in Reihen angeordnete Druckköpfe. Dies kann die Beschichtungsgeschwindigkeit erhöhen. Die Steuereinheit steuert die Relativbewegung zwischen Kopf und Werkstück und kann zudem die Beschichtungseinheit steuern, beispielsweise über eine Impulsregelung einzelner Reihen oder einzelner Düsen. Das System kann ferner dazu eingerichtet sein das Beschichtungsverfahren als Funktion der Bewegung des Beschichtungskopfes singlepass, multipass oder reverse auszugestalten.

Innerhalb einer bevorzugten Ausführungsform des Systems kann der Druckkopf der Inkjet-Einheit mehrere Düsenreihen aufweisen und das Verfahren für jede Düsenreihe separat durchgeführt werden. Das erfindungsgemäße Verfahren kann mit einem Beschichtungskopf gefahren werden, welcher neben- oder hintereinander unabhängig gesteuerte Düsenkopfreihen aufweist. Das erfindungsgemäße Verfahren kann dann für die Gesamtheit an Düsenköpfen oder für die einzelnen Düsenkopfreihen durchgeführt werden. So kann beispielsweise die Anpassung gegenüber einem Normalenvektor der Verfahrbahn erfolgen, welcher am Mittelpunkt der Düsenreihen "aufgehängt" ist. Es ist aber auch möglich, dass der Normalenvektor am Mittelpunkt einer jeden Düsenreihe oder jeder Düse "aufgehängt" ist. Dadurch ergeben sich für jede Düsenreihe oder jede Düse individuelle Anpassungen und derart kann das Dekor noch verzerrungsfreier auf die Werkstückoberfläche aufgebracht werden.

In einem weiteren Aspekt des Systems kann die Recheneinheit des Systems dazu ausgelegt sein mehrere Sätze unterschiedlich verlaufender Verfahrbahnen $D_0$ und die jeweils dazu benachbarten Verfahrbahnen über die gesamte Werkstückoberfläche festzulegen und denjenigen Satz auszuwählen, welcher die geringste Anzahl an Verfahrbahnen aufweist. Zur Optimierung der Verfahrbahnen und zur Optimierung der Druckbahnen für die einzelnen Verfahrbahnen kann es vorteilhaft sein, mehrere Ansatzpunkte und Richtungen relativ zur Werkstückoberfläche für die erste Verfahrbahn zu wählen und beispielsweise als Funktion der gewählten maximal zulässigen Winkelabweichungen zwischen Druckkopf und Werkstückoberfläche die daran anschließenden Verfahrbahnen zu definieren. Über einen iterativen Prozess kann dann diejenige Konstellation für die Summe an Verfahrbahnen gewählt werden, welche mit der geringsten Anzahl an Verfahrbahnen und einen maximalen Druckbereich pro Verfahrbahn auskommt. Derart kann der Beschichtungsprozess beschleunigt und optimiert werden.

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung einzuschränken.

Es zeigen die:

Fig. 1    in den Ausgestaltungen a), b), c) Beispiele unterschiedlich gekrümmter/verzerrter Oberflächen - parallel zur Verfahrbahn gekrümmte Oberflächen

Fig. 2    in den Ausgestaltungen a), b), c) Beispiele unterschiedlich gekrümmter/verzerrter Oberflächen - senkrecht zur Verfahrbahn gekrümmte Oberflächen

Fig. 3     in den Ausgestaltungen a), b), c) Beispiele unterschiedlich gekrümmter/verzerrter Oberflächen - bidirektional gekrümmte - verzerrte - Oberflächen

Fig. 4     in den Ansichten a) und b), einen beispielhaften Verlauf einer Verfahrbahn über eine komplexe Oberfläche und Verwendung von Rasterlinien;

Fig. 5     in den Ansichten a) und b), einen beispielhaften Verlauf einer Verfahrbahn über eine komplexe Oberfläche und Verwendung von Rasterlinien;

Fig. 6     Darstellung der Winkelabweichungen zwischen Normalenvektor der Verfahrbahn und Normalenvektor der Rasterfläche;

Fig. 7     eine Darstellung des Verfahrbahn und Druckbereiches von Verfahrbahnen inklusive der möglicherweise auftretenden Überlappungsbereiche;

Fig. 8     in den Ausgestaltungen a) und b), eine Darstellung von Schnittlinien benachbarter Druckbahnen;

Fig. 9     in den Ausgestaltungen a), b), c), eine Darstellung von Schnittlinien benachbarter Druckbahnen;

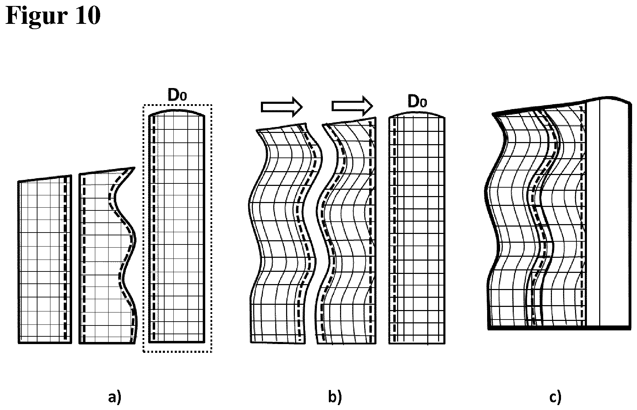

Fig. 10     in den Ausgestaltungen a), b), c), eine Darstellung von Schnittlinien benachbarter Druckbahnen.

Die Figur 1 zeigt schematisch die Möglichkeiten zur unterschiedlichen Beschichtung von Oberflächen. Die Verfahrbahn des Beschichtungskopfes (dargestellt durch den durchgehenden Pfeil (-)) verfährt in diesen Beispielen a) - c) parallel zur Krümmung der Oberfläche des Werkstücks (dargestellt durch den unterbrochenen Pfeil (- - - - )). Als gekrümmte Oberflächen werden allgemein jene Oberflächen verstanden, die abrollbar sind. Diese zeichnen sich dadurch aus, dass konkave und/oder konvexe Krümmungen nur in Längs- oder in Querrichtung zur Verfahrbahn der Druckeinheit liegen und für jeden Punkt der Ebene sich ein Gerade beschreiben lässt die orthogonal zum Krümmungsverlauf verläuft.

Die Figur 2 zeigt schematisch die Möglichkeiten zur unterschiedlichen Beschichtung von Oberflächen. Die Verfahrbahn des Beschichtungskopfes (dargestellt durch den durchgehenden Pfeil (-)) verfährt in diesen Beispielen a) - c) 90° versetzt zur Krümmung der Oberfläche des Werkstücks (dargestellt durch den unterbrochenen Pfeil (- - - -)).

Die Figur 3 zeigt schematisch die Möglichkeiten zur unterschiedlichen Beschichtung von Oberflächen. Die Oberfläche des Werkstücks weist Krümmungen in mehr als einer Richtung auf (dargestellt durch die unterbrochenen Pfeile (- - - -)). Dies bedeutet, dass die Oberfläche verzerrt ist. Die verzerrten Oberflächen unterscheiden sich von den gekrümmten Oberflächen darin, dass diese nicht abwickelbar sind. Bei verzerrten Oberflächen müssten beispielsweise aufzubringende Folien in Teilbereichen gedehnt, gestreckt oder gestaucht werden. Die Verfahrbahn des Beschichtungskopfes (dargestellt durch den durchgehenden Pfeil ( _____ )) kann an dieser Werkstückoberfläche nicht stets symmetrisch zur Krümmung verlaufen und es werden bei konstanter Bewegungsrichtungen des Beschichtungskopfes Werkstückoberflächenbereiche mit deutlich anderer Winkelausrichtung zum Beschichtungskopf hin befahren. Neben den Winkelabweichungen werden bei einer konstanten Bewegungsrichtung des Beschichtungskopfes auch verschiedene Strecken auf der Werkstückoberfläche überstrichen.

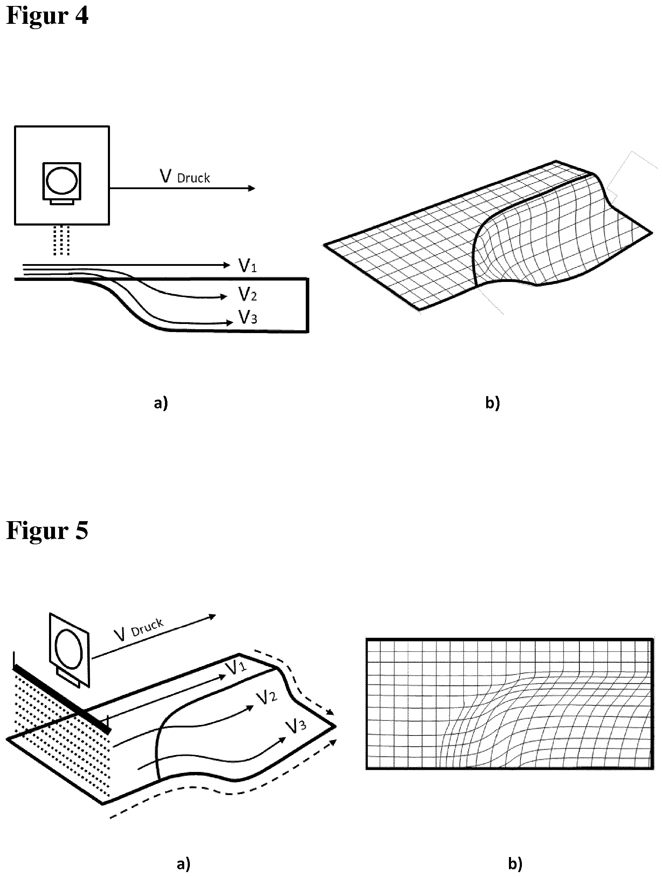

Die Figur 4 und Figur 5 zeigen beispielhaft unterschiedliche Bewegungsbahnen verschiedener Beschichtungsdüsen (V1-V3) eines Inkjet-Kopfes auf einer darunterliegenden konkav und konvex verzerrten Oberfläche a). In den jeweiligen Figur b) ist die entsprechende Rasterprojektion dargestellt. Insbesondere die abweichende Ausrichtung der jeweiligen Düse zur darunterliegenden Oberfläche hat direkten Einfluss auf die Strecken, die die Düsen auf der darunterliegenden Oberfläche, bei konstanter Bewegung der Druckeinheit, zurücklegen. Diese ergibt sich aus der starren, nicht an die Oberfläche anpassbaren Beschichtungskopfoberfläche. Die Arbeitsweise des Druckkopfes ist als 2-dimensional zu verstehen, unabhängig davon, dass über die Aktorik die Oberfläche und/oder die Beschichtungseinheit eine Relativbewegung mit bis zu 6 Freiheitgraden ausführen kann. Diese Relativbewegung dient dazu, die Druckeinheit möglichst parallel zu jeder Oberflächenposition zuzustellen. Da die Bilddaten nur 2-dimensional abgelegt sind müssen sonstige weitere Daten des Bahnverlaufes wie z.B. Winkelabweichung und Streckenunterschiede bereits in den Bilddaten berücksichtigt werden.

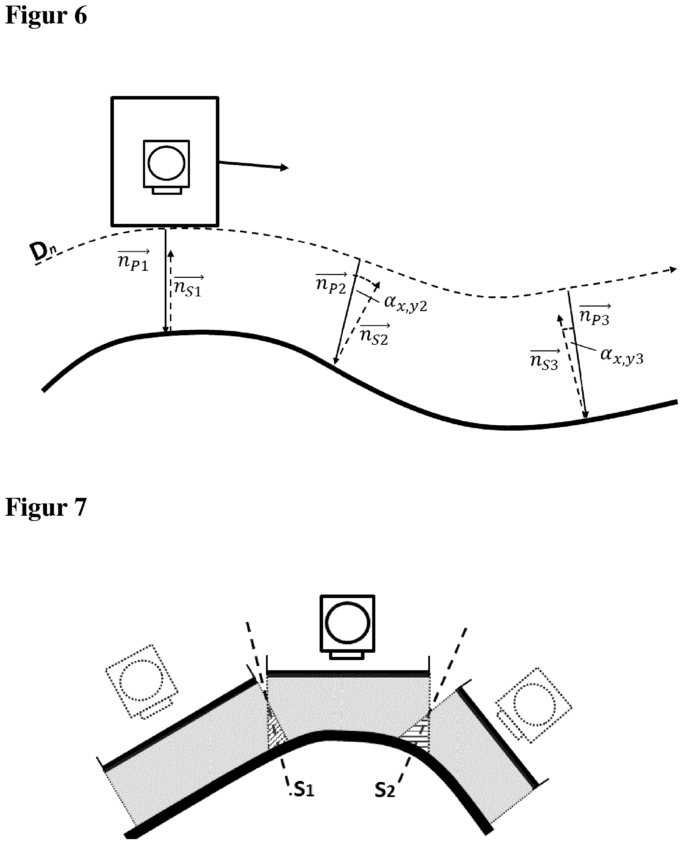

Die Figur 6 zeigt eine beispielhafte Darstellung zum Erhalt der Winkelabweichung zwischen den Normalvektoren der Verfahrbahn (Vektoren mit dem Index P) und dem zugehörigen Normalvektor der Rasterfläche auf der Oberfläche (Vektoren mit dem Index S). Bei kollinearen Normalvektoren ergibt sich keine Winkelabweichung zwischen beiden Normalenvektoren. Für diese Rasterflächen gilt, dass der Normalenvektor der Druckebene ein Vielfaches des Normalenvektors der betreffenden Rasterfläche ist. Die Winkelabweichung beider Normalenvektoren in X-als Y-Richtung beträgt jeweils null. Ist die Oberfläche gekrümmt, sind die Normalenvektoren nicht mehr kollinear, sondern es ergeben sich je nach Ausrichtung zwischen Werkstückoberfläche und Verfahrbahn Winkelabweichungen jeweils in X- und/oder Y-Richtung ($\alpha(x)$, $\alpha(y)$).

Die Figur 7 zeigt eine Möglichkeit der Aufteilung bidirektional gekrümmter Oberflächen in Verfahr- und Druckbahnen. Dargestellt ist, dass sich die einzelnen Verfahrbahnen auf der Oberfläche überlappen (S1, S2), d.h. dass einzelne Werkstückoberflächenbereiche prinzipiell über mehrere Verfahrbahnen beschichtet werden können. Als Funktion der Krümmung der Oberfläche kann es zweckmäßig sein pro Verfahrbahn unterschiedliche Beschichtungsbereich (Druckbahnen) zu wählen. So ist es möglich, dass der konstant gekrümmt (planare) linke Bereich durch eine Druckbahn beschichtet wird, welche der maximal möglichen Verfahrbahn entspricht (gro-ßer Beschichtungsbereich pro Verfahrbahn). Überstreicht die Verfahrbahn allerdings einen Bereich mit starken Krümmungen (mittlerer Kopf), so kann es günstig sein, den Druckbereich unter dieser Verfahrbahn klein zu wählen, um die Winkelabweichungen der Oberfläche pro Verfahrbahn nicht zu groß werden zu lassen. Dies ist im Vergleich zur linken Verfahrbahn durch den kleineren horizontalen Strich angedeutet.

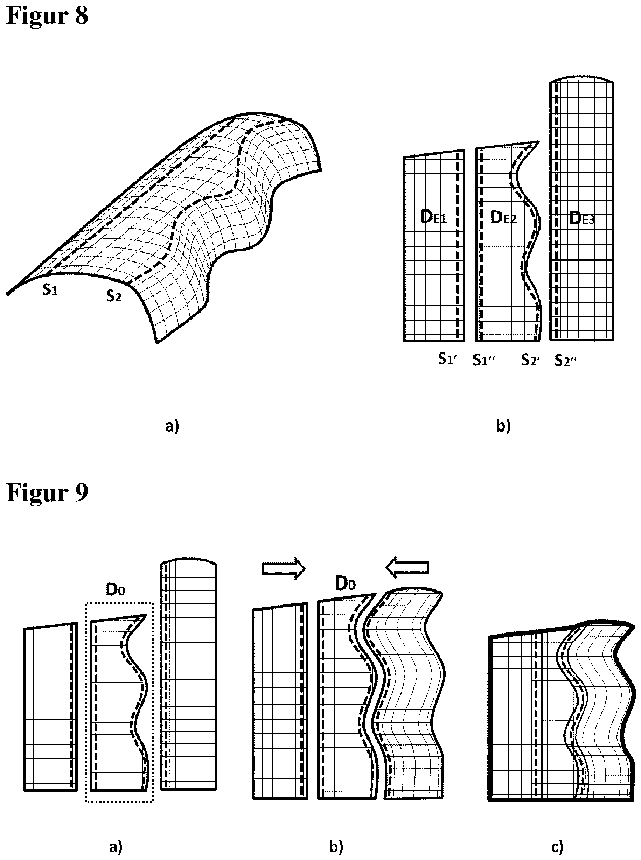

Die Figur 8 zeigt Druckbahnen als Teilbereich von Verfahrbahnen an einer komplexen Werkstückoberfläche. Die Ränder der Druckbahnen an welchen diese aneinanderstoßen werden als Schnittlinie bezeichnet. Je nach gewähltem Verlauf der Verfahr- und Druckbahnen, dem sogenannten Stitching, können die Druckbahnen hart an einander gelegt werden oder sich jeweils auslaufend überlappen. Durch das Stiching ist möglich, die Übergänge zwischen den Druckbahnen über die Drucksystemsteuerung weiter zu kaschieren, dass im späteren Dekoren diese Schnittbereiche nicht zu erkennen sind. Insbesondere bei nicht parallelen Druckbahnen ist zu beachten, dass die Verfahrbahnen abweichende Winkel zur darunterliegenden Fläche des Schnittbereiches aufweisen.

Die Figuren 9 und zeigen komplexe Oberflächen mit den entsprechenden Druckbahnen und Schnittlinien. Auf diesen Oberflächen sind ebenfalls das entsprechende Oberflächenraster und die Schnittlinien angedeutet. Das Dekor der zu bedruckenden Oberfläche setzt sich aus den Segmenten der einzelnen Verfahr- und Druckbahnen zusammen. Damit diese ein homogenes Gesamtbild ergeben, sollten die Bilddaten der einzelnen Druckbahnen so auf einander abgestimmt werden, dass sie ohne sichtbare Sprünge im Dekor aneinandergelegt werden können.

Die Bahnen sollten angeglichen werden. Diese Harmonisierung kann unabhängig von der individuellen Oberflächengeometrie unter den jeweiligen Bahnen erfolgen. Sinnvollerweise kann diese abhängig von den Schnittlinien der Druckbahn erfolgen. Dabei kann unter zwei Arten von Schnittlinien unterscheiden werden:

- Benachbarte Druckbahnen mit komplementären Schnittlinien
- Benachbarte Druckbahnen mit nicht komplementären Schnittlinien

Als benachbarte Druckbahnen mit komplementären Schnittlinien werden alle benachbarten Druckbahnen verstanden bei denen die Projektionen der Schnittlinien an die jeweilige Druckbahn komplementär zur Projektion derselben Schnittlinie an die jeweils benachbarte Druckbahn ist. Unter anderem lassen sich parallele Bahnen, also solche welche sich nur hinsichtlich X- und Y-Ausrichtung unterscheiden, sowie Schnittlinien die konstant gerade entlang der X-Achse verlaufen, zu "benachbarten Druckbahnen mit komplementären Schnittlinien" zählen. Es sind aber auch andere Konstellationen denkbar. Bei dieser Art von Druckbahnen können die benachbarten Druckbahnen ohne zusätzliche Bearbeitung der Bilddaten aneinandergelegt werden. Bei benachbarten Druckbahnen mit "nicht komplementären Schnittlinien" lassen sich die Projektionen der Schnittlinie an die beiden Druckbahnen nicht schlüssig aneinanderlegen. Die Ausrichtung des Druckkopfes hat hierbei wesentlichen Einfluss auf die 2-dimensionale Projektion der Schnittlinie, welche den Rahmen für die Bilddaten der jeweiligen Druckbahn definiert. Je nach Ausrichtung kann sich somit die Projektionslänge der Schnittlinie ändern, wodurch eine Anpassung der Bilddaten einer oder beider benachbarter Bahnen erforderlich werden kann, um diese zu harmonisieren.

**Patentansprüche**

1. Verfahren zum verzerrungsfreien Beschichten 3-dimensionaler Werkstücke mit partiell bidirektional gekrümmten Oberflächen,
**dadurch gekennzeichnet, dass**
das Verfahren mindestens die Schritte umfasst:

    a) Bereitstellung digitaler 2D-Daten eines aufzubringenden Dekors und digitaler 3D-Oberflächenprofildaten eines zu beschichtenden Werkstücks;
    b) Aufteilen der Werkstückoberfläche in Flächen eines Rasters, wobei die einzelnen Flächen des Rasters aus einem Linienzug äquidistanter Linien mit Abstand $X_0$ parallel zu einer X- und einem weiteren, dazu orthogonalen Linienzug äquidistanter Linien mit Abstand $Y_0$ parallel zur einer Y-Richtung ausgebildet werden;
    c) Aufteilen der Werkstückoberfläche in eine oder mehrere Verfahrbahnen eines Beschichtungskopfes, wobei die Verfahrbahnen oberhalb der Werkstückoberfläche verlaufen und die Schnittlinien benachbarter Verfahrbahnen zumindest aneinanderstoßen;
    d) Projektion der die Rasterflächen begrenzenden Linienzüge an eine oder mehrere Verfahrbahnen oberhalb der betreffenden Rasterfläche, wobei die Projektion entlang des Normalenvektors der jeweiligen Verfahrbahn erfolgt;
    e) Anpassen der 2D-Dekor-Druckdaten für jede Rasterfläche, wobei die Anpassung der Druckdaten der Rasterfläche sowohl eine Funktion der ursprünglich bereitgestellten 2D-Daten des Dekors als auch eine Funktion der Rasterprojektion an die Verfahrbahn ist; und

f) Beschichten der Werkstückoberfläche auf Basis der angepassten Dekor-Druckdaten.

2. Verfahren nach Anspruch 1, wobei das Anpassen der 2D-Dekor-Druckdaten im Verfahrensschritt e) die Pixeldichte der Rasterflächen umfasst.

3. Verfahren nach einem der vorhergehenden Ansprüche, wobei das Anpassen der 2D-Dekor-Druckdaten im Verfahrensschritt e) die Auftragsmenge auf die jeweilige Rasterfläche umfasst.

4. Verfahren nach einem der vorhergehenden Ansprüche, wobei in einem weiteren Schritt der Normalenvektor für jede Rasterfläche aus Schritt b) bestimmt wird.

5. Verfahren nach einem der vorhergehenden Ansprüche, wobei die projektionsabhängige Anpassung in Schritt e) entweder als Funktion

e1) der Winkelabweichungen $\alpha(x,y)$ des Normalenvektors der Rasterfläche in der X-$\alpha(x)$ wie auch in der Y-Richtung $\alpha(y)$ zum Normalenvektor der Verfahrbahn; oder
e2) der mittleren Abstände der Rasterlinien in X- $\Delta X$, in Y-Richtung $\Delta Y$ oder als Kombination der mittleren Abstände in XY-Richtung $\Delta XY$ der auf die Verfahrbahn projizierten Rasterlinien erfolgt.

6. Verfahren nach einem der vorhergehenden Ansprüche, wobei die Aufteilung der Werkstückoberfläche in mehrere Verfahrbahnen in Schritt c) sequentiell erfolgt, wobei in einem ersten Schritt eine erste Verfahrbahn $D_0$ und in weiteren Schritten die folgenden Verfahrbahnen jeweils benachbart zur vorhergehenden Verfahrbahn festgelegt werden, wobei die weiteren Verfahrbahnen entweder lückenlos an benachbarte Verfahrbahn anschließen oder überlappend zu diesen festgelegt werden.

7. Verfahren nach Anspruch 6, wobei der Schritt c) die Schritte umfasst:

c1) Festlegen eines aktiven Beschichtungsbereichs für jede Verfahrbahn als Funktion der Proj ektionen der Schnittlinien und der Rasterflächen an die Verfahrbahn;
c2) Auswahl eines aktiven Beschichtungsbereiches einer Verfahrbahn $D_0$; und
c3) Angleichen der aktiven Beschichtungsbereiche der jeweils benachbarten Verfahrbahnen $D_{-1}$ und $D_{+1}$, wobei die Angleichung derart erfolgt, dass sich aktive Beschichtungsbereiche benachbarter Verfahrbahnen lückenlos ergänzen.

8. Verfahren nach Anspruch 7, wobei in Schritt c1) der aktive Beschichtungsbereich einer Verfahrbahn als Funktion der maximalen Winkelabweichung zwischen Verfahrbahn-Normalenvektor und Normalenvektoren der darunterliegenden Rasterflächen festgelegt wird.

9. Verfahren nach einem der Ansprüche 4 - 8, wobei die Ausrichtung der ersten Verfahrbahn $D_0$ in Schritt c) so gewählt wird, dass die resultierende Summe der Winkelabweichungen $\alpha$ in dieser Richtung kleiner ist als die Summe der Winkelabweichungen in einer dazu orthogonalen Richtung.

10. Verfahren nach einem der Ansprüche 5 - 9, wobei das Aufteilen der Werkstückoberfläche in eine oder mehrere Verfahrbahnen in Schritt c) so erfolgt, dass die Gesamtsumme des Produktes $\tan(\alpha(x)) * \tan(\alpha(y))$ über die einzelnen Rasterflächen einer Verfahrbahn jeweils Null ergibt.

11. Verfahren nach einem der Ansprüche 5 - 10, wobei die projektionsabhängige Anpassung der Druckdaten einer Rasterfläche in der Variante e1) als Funktion der Winkelabweichungen $\alpha(x,y)$ zwischen Normalenvektor der Rasterfläche und Normalenvektor der entsprechenden Druckbahn in Schritt f) über mindestens zwei Faktoren F(x,y):

$$F(x) = 1 + \tan(\alpha(x))$$

$$F(y) = 1 + \tan(\alpha(y))$$

erfolgt.

**12.** Verfahren nach einem der vorhergehenden Ansprüche, wobei der Abstand der äquidistanten Linien der Linienzüge in X- $X_0$ und in Y-Richtung $Y_0$ in Schritt b) größer oder gleich 0,1 mm und kleiner oder gleich 5 mm beträgt.

**13.** Verwendung eines Verfahrens nach einem der vorhergehenden Ansprüche zur Beschichtung von Automobilteilen.

**14.** System zur Beschichtung 3-dimensionaler bidirektional gekrümmter Oberflächen mindestens aufweisend eine Recheneinheit, einen Aktorik, eine Inkjet-Einheit mit mindestens einem Düsenkopf und eine Steuereinheit **dadurch gekennzeichnet, dass**
das System dazu eingerichtet ist, dass Verfahren nach einem der Ansprüche 1 - 12 auszuführen.

**15.** System nach Anspruch 14, wobei der Druckkopf der Inkjet-Einheit mehrere Düsenreihen aufweist das Verfahren für jede Düsenreihe separat durchgeführt wird.

**Claims**

**1.** Method for distortion-free coating of 3-dimensional workpieces with partially bidirectionally curved surfaces, **characterized in that** the method comprises at least the steps:

   a) Provision of digital 2D data of a decoration to be applied and digital 3D surface profile data of a workpiece to be coated;
   b) Dividing the workpiece surface into raster areas, the individual raster areas being formed from a line train of equidistant lines at a distance $X_0$ parallel to an X direction and a further line train, orthogonal thereto, of equidistant lines at a distance $Y_0$ parallel to a Y direction;
   c) Dividing the workpiece surface into one or more trajectories of a coating head, the trajectories running above the workpiece surface and the intersection lines of adjacent trajectories at least abutting one another;
   d) Projection of the line trains bordering the raster areas onto one or more trajectories above the relevant raster area, wherein the projection being made along the normal vector of the respective trajectory;
   e) Matching the 2D decoration print data for each raster area, where the matching of the print data of the raster area is both a function of the originally provided 2D data of the decoration and a function of the raster projection to the trajectory; and
   f) Coating of the workpiece surface based on the adjusted decoration print data.

**2.** The method of claim 1, wherein matching the 2D decoration print data in method step e) comprises the pixel density of the raster areas.

**3.** The method according to any one of the preceding claims, wherein matching the 2D decoration print data in method step e) comprises the application amount to the respective raster area.

**4.** The method according to any of the preceding claims, wherein in a further step the normal vector is determined for each raster area from step b).

**5.** The method according to any one of the preceding claims, wherein the projection-dependent matching in step e) is either performed as a function of

   e1) the angular deviations $\alpha(x,y)$ of the normal vector of the raster area in the X- $\alpha(x)$ as well as in the Y-direction $\alpha(y)$ to the normal vector of the trajectory; or
   e2) the mean distances of the raster lines in X- $\Delta X$, in Y-direction $\Delta Y$ or as a combination of the mean distances in XY-direction $\Delta XY$ of the raster lines projected onto the trajectory.

**6.** The method according to one of the preceding claims, wherein the division of the workpiece surface into several trajectories is carried out sequentially in step c), wherein in a first step a first trajectory $D_0$ and in further steps the following trajectories are each defined adjacent to the preceding trajectory, wherein the further trajectories either adjoin adjacent trajectories without gaps or are defined overlapping these.

**7.** The method according to claim 6, wherein step c) comprises the steps of:

   c1) determine an active coating area for each trajectory as a function of the projections of the intersection lines and the raster areas to the trajectory;

c2) selection of an active coating area of a trajectory $D_0$; and

c3) alignment of the active coating areas of the respective adjacent trajectories $D_{-1}$ and $D_{+1}$, with the alignment taking place in such a way that active coating areas of adjacent trajectories complement each other without gaps.

**8.** The method according to claim 7, wherein in step c1) the active coating area of a trajectory is determined as a function of the maximum angular deviation between the trajectory normal vector and normal vectors of the underlying raster areas.

**9.** The method according to any one of claims 4-8, wherein the orientation of the first trajectory $D_0$ in step c) is selected such that the resulting sum of the angular deviations $\alpha$ in this direction is smaller than the sum of the angular deviations in a direction orthogonal thereto.

**10.** The method according to any one of claims 5-9, wherein the division of the workpiece surface into one or more trajectories in step c) is carried out in such a way that the total sum of the product $\tan (\alpha(x)) * \tan (\alpha(y))$ over the individual raster areas of a trajectory is zero in each case.

**11.** The method according to any one of claims 5 - 10, wherein the projection-dependent matching of the print data of a raster area in variant e1) as a function of the angular deviations $\alpha(x,y)$ between normal vector of the raster area and normal vector of the corresponding trajectory in step f) is performed via at least two factors $F(x,y)$:

$$F(x) = 1 + \tan (\alpha(x))$$

$$F(y) = 1 + \tan (\alpha(y)).$$

**12.** Method according to any one of the preceding claims, wherein the distance of the equidistant lines of the line trains in X- $X_0$ and in Y-direction $Y_0$ in step b) is greater than or equal to 0.1 mm and less than or equal to 5 mm.

**13.** Use of a method according to any one of the preceding claims for coating automotive parts.

**14.** System for coating 3-dimensional bidirectionally curved surfaces, at least comprising a computing unit, an actuator, an inkjet unit with at least one nozzle head, and a control unit, **characterized in that** the system is set up to carry out the method according to one of claims 1-12.

**15.** The system of claim 14, wherein the printhead of the inkjet unit comprises a plurality of nozzle rows, the method being performed separately for each nozzle row.

**Revendications**

**1.** Procédé de revêtement sans déformation de pièces ouvrées tridimensionnelles pourvue de surfaces partiellement bidirectionnelles courbes,

**caractérisé en ce que**

le procédé comprend au moins les étapes :

a) de mise au point de données 2D numériques d'un décor à appliquer et de données de profils de surfaces 3D numériques d'une pièce ouvrée à recouvrir :

b) de division de la surface de l'outil ouvré en surfaces d'un quadrillage, où les surfaces individuelles du quadrillage sont formées à partir d'un tracé de ligne de lignes équidistantes d'un intervalle $X_0$ parallèles à une direction X et d'un autre tracé de ligne orthogonal par rapport à celui-ci de lignes équidistantes d'un intervalle $Y_0$ parallèle à une direction Y ;

c) de division de la surface de l'outil ouvré en une ou plusieurs bandes de balayage d'une tête de revêtement, où les bandes de balayage s'étendent au-dessus de la surface de la pièce ouvrée et les lignes d'intersection de bandes de balayage voisines sont au moins jointives les autres aux autres ;

d) de projection des tracés de lignes délimitant les surfaces de quadrillage au niveau d'une ou de plusieurs bandes de balayage au-dessus de la surface de quadrillage en question, où la projection a lieu le long du vecteur normal de la bande de balayage respective ;

e) d'adaptation des données d'impression de décor 2D pour chaque surface de quadrillage, où l'adaptation des données d'impression de la surface de quadrillage est à la fois une fonction des données 2D fournies à l'origine et une fonction de la projection du quadrillage au niveau de la bande de balayage ; et

f) de revêtement de la surface de la pièce ouvrée sur la base des données d'impression adaptées.

2. Procédé selon la revendication 1, dans lequel l'adaptation des données d'impression de décor 2D dans l'étape de procédé e) comprend la densité de pixels des surfaces de quadrillage.

3. Procédé selon l'une des revendications précédentes, dans lequel l'adaptation des données d'impression de décor 2D dans l'étape de procédé e) comprend la quantité à appliquer sur la surface de quadrillage respective.

4. Procédé selon l'une des revendications précédentes, dans lequel le vecteur normal est déterminé dans une nouvelle étape pour chaque surface de quadrillage à partir de l'étape b).

5. Procédé selon l'une des revendications précédentes, dans lequel l'adaptation dépendant de la projection dans l'étape e) a lieu soit en tant que fonction

e1) de déviations angulaires $\alpha(x,y)$ du vecteur normal de la surface de quadrillage dans la direction X, $\alpha(x)$, comme également dans la direction Y, $\alpha(y)$, par rapport au vecteur normal de la bande de balayage ; soit

e2) des intervalles moyens des lignes de quadrillage en direction X, $\Delta X$, en direction Y, $\Delta Y$, ou en tant que combinaison des intervalles moyens en direction XY, $\Delta XY$, des lignes de quadrillage projetées sur la bande de balayage.

6. Procédé selon l'une des revendications précédentes, dans lequel la division de la surface de la pièce ouvrée en plusieurs bandes de balayage a lieu séquentiellement dans l'étape c), où une première bande de balayage $D_0$ est déterminée dans une première étape et les bandes de balayages suivantes respectivement voisines de la bande de balayage précédente sont déterminées dans des nouvelles étapes, où les nouvelles bandes de balayage sont déterminées se succédant soit sans espaces au niveau de la bande de balayage voisine, soit superposées par rapport à celle-ci.

7. Procédé selon la revendication 6, dans lequel l'étape c) comprend les étapes :

c1) de détermination d'une zone de revêtement active pour chaque bande de balayage en tant que fonction des projections des lignes d'intersection et des surfaces de quadrillage au niveau de la bande de balayage ;

c2) de sélection d'une zone de revêtement active d'une bande de balayage $D_0$ ; et

c3) d'harmonisation des zones de revêtement actives des bandes de balayage $D_{-1}$ et $D_{+1}$ respectivement voisines, où l'harmonisation a lieu de telle manière que les zones de revêtement actives de bandes de balayage voisines se complètent sans espace.

8. Procédé selon la revendication 7, dans lequel, dans l'étape c1), la zone de revêtement active d'une bande de balayage est déterminée en tant que fonction de la déviation angulaire maximale entre le vecteur normal de bande de balayage et les vecteurs normaux des surfaces de quadrillage situées en-dessous.

9. Procédé selon l'une des revendications 4 à 8, dans lequel l'orientation de la première bande de balayage $D_0$ dans l'étape c) est choisie de telle manière que la somme résultant des déviations angulaires $\alpha$ dans cette direction est inférieure à la somme des déviations angulaires dans une direction qui lui est orthogonale.

10. Procédé selon l'une des revendications 5 à 9, dans lequel la division de la surface de l'outil ouvré en une ou plusieurs bandes de balayage a lieu dans l'étape c) de telle manière que la somme totale du produit tan $(\alpha(x))$ * tan $(\alpha(y))$ sur les surfaces de quadrillage individuelles d'une bande de balayage est respectivement égale à zéro.

11. Procédé selon l'une des revendications 5 à 10, dans lequel l'adaptation dépendant de la projection des données d'impression d'une surface de quadrillage dans la variante e1) a lieu en tant que fonction des déviations angulaires $\alpha(x,y)$ entre le vecteur normal de la surface de quadrillage et le vecteur normal de la bande d'impression correspondante dans l'étape f) par le biais d'au moins deux facteurs $F(x,y)$ :

$$F(x) = 1 + \tan(\alpha(x))$$

$$F(y) = 1 + \tan(\alpha(y)).$$

12. Procédé selon l'une des revendications précédentes, dans lequel l'intervalle des lignes équidistantes des tracés de lignes dans la direction $X - X_0$ et dans la direction $Y - Y_0$ dans l'étape b) est supérieur ou égal à 0,1 mm ou inférieur ou égal à 5 mm.

13. Utilisation d'un procédé selon l'une des revendications précédentes pour le revêtement de pièces d'automobiles.

14. Système de revêtement de surfaces tridimensionnelles courbes de manière bidirectionnelle présentant au moins une unité de calcul, un actionnement, une unité d'impression à jet d'encre avec au moins une tête de pulvérisation et une unité de commande
**caractérisé en ce que**
le système est conçu pour exécuter un procédé selon l'une des revendications 1 à 12.

15. Système selon la revendication 14, dans lequel la tête de pulvérisation de l'unité d'impression à jet d'encre présente plusieurs rangées de buses, le procédé est exécuté séparément pour chaque rangée de buses.

# Figur 1

a)                                 b)                                 c)

# Figur 2

a)                                 b)                                 c)

# Figur 3

a)                                 b)                                 c)

# Figur 4

$V_{Druck}$

$V_1$
$V_2$
$V_3$

a)

b)

# Figur 5

$V_{Druck}$

$V_1$
$V_2$
$V_3$

a)

b)

# Figur 6

# Figur 7

# Figur 8

a)

b)

# Figur 9

a)

b)

c)

# Figur 10

a)          b)          c)

**IN DER BESCHREIBUNG AUFGEFÜHRTE DOKUMENTE**

**In der Beschreibung aufgeführte Patentdokumente**

- US 5831641 A
- DE 102012006371 A1
- EP 2213462 A1
- EP 3208746 A1
- EP 2287722 A1